# EUROPÄISCHE PATENTANMELDUNG

(11) **EP 0 812 611 A1**
(43) Veröffentlichungstag der Anmeldung: **17.12.1997**
(21) Anmeldenummer: 97104892.1
(22) Anmeldetag: 21.03.1997
(51) Int. Cl.: B01D 33/15

(54) **Drehscheibenfilter**

(30) Priorität: 13.06.1996 DE 19623644
(71) Anmelder: Brückner Apparatebau GmbH, D-64711 Erbach (DE)
(72) Erfinder: Koch, Werner, 64711 Erbach (DE); Kaufmann, Bernd, 64711 Erbach (DE)
(74) Vertreter: Tetzner, Michael, Dipl.-Ing.

(57) **Zusammenfassung**

Die Erfindung betrifft einen Filter zur Reinigung einer Flüssigkeit eines Flüssigkeitssystems, insbesondere zur Beseitigung von Feststoffpartikeln, wie Flusen, aus der Flüssigkeit, bestehend aus einem Filterelement (1), das Durchtrittsöffnungen aufweist, die die Flüssigkeit durchtreten lassen und die Feststoffpartikel zurückhalten, wobei lediglich ein Teilbereich des Filterelements mit der Flüssigkeit in Kontakt steht, einer Dreheinrichtung (2) zum Drehen des Filterelements, eine Düseneinrichtung(3) zum Aufbringen von Reinigungsflüssigkeit auf einen momentan nicht mit der Flüssigkeit in Kontakt stehenden Bereich des Filterelements, um am Filterelement haftende Feststoffpartikel abzulösen sowie eine Trenneinrichtung (4) zum Trennen der abgelösten Feststoffpartikel von der Reinigungsflüssigkeit. Erfindungsgemäß wird als Reinigungsflüssigkeit gefilterte Flüssigkeit des Flüssigkeitssystems verwendet, die über einen Bypass zur Düseneinrichtung geleitet wird. Ferner sind Mittel zur Rückführung der in der Trenneinrichtung abgetrennten Flüssigkeit zum Flüssigkeitssystem vorgesehen.

## Beschreibung

Die Erfindung betrifft ein Filter zur Reinigung einer Flüssigkeit eines Flüssigkeitssystems, insbesondere zur Beseitigung von Feststoffpartikeln, wie Flusen, aus der Flüssigkeit.

Derartige Filter kommen beispielsweise zum Einsatz in Flottenströmen von kontinuierlichen und diskontinuierlichen Bleich-, Färbe- und Waschmaschinen sowie Mercerisiermaschinen. Weitere Anwendungsmöglichkeiten bestehen beispielsweise auch in Wärmetauschern und bei der Abwasserfilterung.

Aus der Praxis sind verschiedene Filter für diese Zwecke bekannt. So wird beispielsweise ein Trommelfilter verwendet, der mit einem Haarsieb aus Gaze versehen ist, der von der Flotte durchströmt wird. Die in der Flüssigkeit befindlichen Flusen bleiben dann in dem Filter zurück. Zum Entleeren des Filters wird dieser mit Frischwasser gespült.

Bei einem anderen bekannten Filter wird die zu reinigende Flüssigkeit seitlich durch ein Rohr geleitet, in dem sich eine Filterpatrone befindet. Zur Reinigung der Filterpatrone wird ein Ventil geöffnet und das Rohr mit Reinigungsflüssigkeit, insbesondere Wasser, gespült.

Ferner kommen Filter gemäß dem Oberbegriff des Anspruches 1 zum Einsatz, bestehend aus
- einem Filterelement, das Durchtrittsöffnungen aufweist, die die Flüssigkeit durchlassen und die Feststoffe zurückhalten, wobei lediglich ein Teilbereich des Filterelements mit der Flüssigkeit in Kontakt steht,
- einer Dreheinrichtung zum Drehen des Filterelements,
- einer Düseneinrichtung zum Aufbringen von Reinigungsflüssigkeit auf einen momentan nicht mit der Flüssigkeit in Kontakt stehenden Bereich des Filterelements, um am Filterelement haftende Feststoffpartikel abzulösen,
- sowie einer Trenneinrichtung zum Trennen der abgelösten Feststoffpartikel von der Reinigungsflüssigkeit.

Als Reinigungsflüssigkeit wird dabei Frischwasser verwendet, wobei die in der Trenneinrichtung voneinander getrennten flüssigen und festen Bestandteile entsorgt werden. Beim Aufbringen der Reinigungsflüssigkeit ist es jedoch unvermeidbar, daß Reinigungsflüssigkeit in die bereits gefilterte Flüssigkeit gelangt und diese dadurch verdünnt. Zur Aufrechterhaltung einer bestimmten Konzentration der Flüssigkeit des Flüssigkeitssystems müssen daher ständig Chemikalien nachgesetzt werden.

Der Erfindung liegt daher die Aufgabe zugrunde, den Filter gemäß dem Oberbegriff des Anspruches 1 dahingehend weiterzuentwickeln, daß die Kosten für die Bereitstellung der Flüssigkeit des Flüssigkeitssystems gesenkt werden.

Erfindungsgemäß wird diese Aufgabe durch die kennzeichnenden Merkmale des Anspruches 1 gelöst.

Erfindungsgemäß wird als Reinigungsflüssigkeit gefilterte Flüssigkeit des Flüssigkeitssystems verwendet, indem ein Bypass gefilterte Flüssigkeit zur Düseneinrichtung leitet und von der Trenneinrichtung Mittel zur Rückführung der abgetrennten Flüssigkeit zum Flüssigkeitssystem vorgesehen sind. Durch diese Maßnahme wird die Flüssigkeit des Flüssigkeitssystems nicht durch zusätzliches Frischwasser verdünnt, so daß ein dadurch bedingter Chemikaliennachsatz vermieden werden kann.

Bei einer vorteilhaften Anwendung des Filters dreht sich die Filterscheibe kontinuierlich, so daß eine permanente Reinigung des Filterelements stattfindet.

Der erfindungsgemäße Filter zeichnet sich insbesondere dadurch aus, daß kein zusätzlicher Wasserverbrauch entsteht, da für die Reinigungsflüssigkeit gefilterte Flüssigkeit des Flüssigkeitssystems verwendet wird, und dadurch bedingt auch keine Verdünnung der Flüssigkeit des Flüssigkeitssystems stattfindet und so auf einen Chemikaliennachsatz verzichtet werden kann.

Nicht zuletzt ergibt sich dadurch auch eine Energieeinsparung, da die Zugabe von Chemikalien und deren Vermischung mit der Flüssigkeit entfällt.

In einem ersten Ausführungsbeispiel weist die Trenneinrichtung eine Auspreßvorrichtung auf, um das mit Flüssigkeit getränkte, die Feststoffpartikel aufweisende Filtrat zusammenzudrücken und dabei Flüssigkeit auszupressen. In Kombination mit der Rückführung dieser ausgepreßten Flüssigkeit zum Flüssigkeitssystem entsteht somit kein Verlust an der Gesamtflüssigkeitsmenge des Flüssigkeitssystems. Zudem wird ein relativ trockenes Filtrat erhalten, das dann in geeigneter Weise entsorgt wird.

In einem zweiten Ausführungsbeispiel gelangen die abgelösten Feststoffpartikel auf ein Siebtransportband, so daß die Flüssigkeit nach unten durchtropft, während die Feststoffpartikel aus dem System herausgeführt und entsorgt werden können, ohne daß das System abgeschaltet werden muß.

Weitere Ausgestaltungen und Vorteile sind Gegenstand der Unteransprüche und werden anhand der Beschreibung zweier Ausführungsbeispiele und der Zeichnung näher erläutert.

In der Zeichnung zeigen
- Fig.1: eine teilweise geschnittene, schematische Seitenansicht des erfindungsgemäßen Filters gemäß einem ersten Ausführungsbeispiel,
- Fig.2: eine teilweise geschnittene, schematische Vorderansicht des Filters gemäß Fig.1,
- Fig.3: eine teilweise geschnittene, schematische Seitenansicht des erfindungsgemäßen Filters gemäß einem zweiten Ausführungsbeispiel und
- Fig.4: eine teilweise geschnittene, schematische Vorderansicht des Filters gemäß Fig.3.

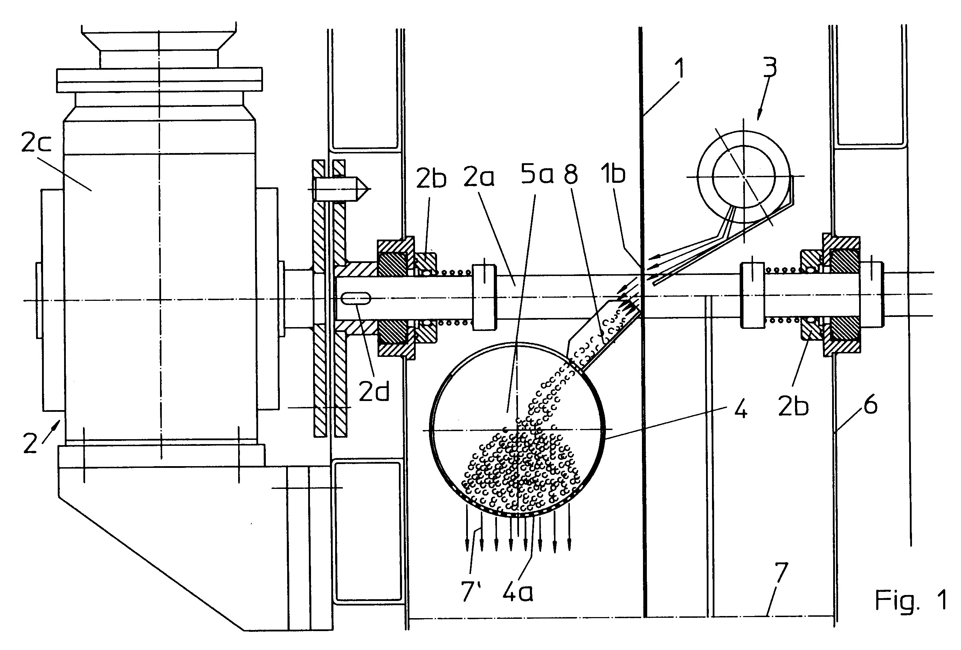

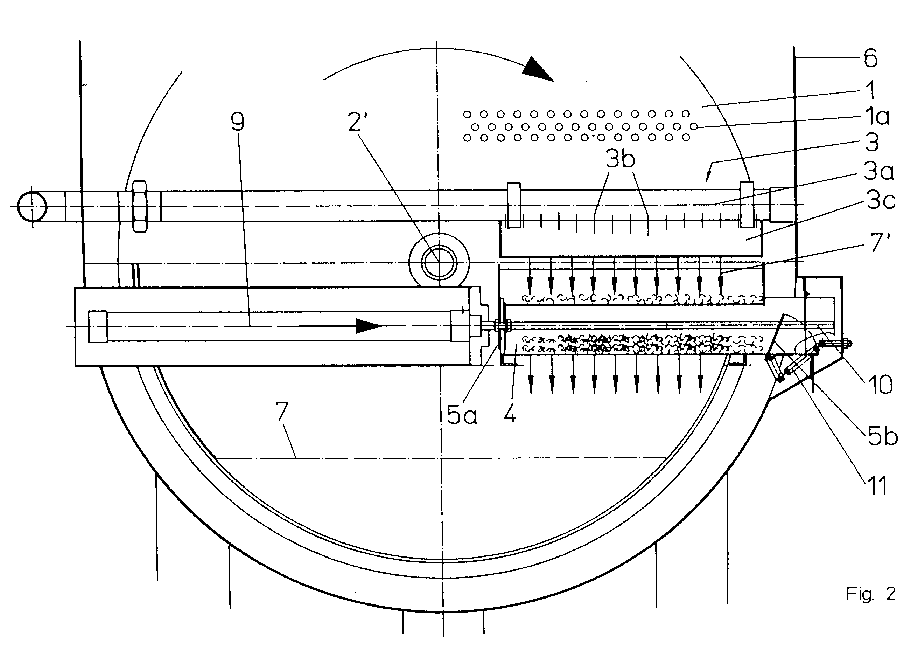

Das in den Fig.1 und 2 dargestellte erste Ausführungsbeispiel eines Filters besteht im wesentlichen aus einem Filterelement 1, einer Dreheinrichtung 2 zum Drehen des Filterelements, einer Düseneinrichtung 3 sowie einer Trenneinrichtung.

Alle Bestandteile des Filters sind in einem Filtergehäuse 6 untergebracht, durch das eine zu reinigende Flüssigkeit 7 durchgeleitet wird. Das Niveau der Flüssigkeit 7 ist in den beiden Figuren mit strichpunktierter Linie dargestellt.

Das Filterelement 1 ist vorzugsweise als Lochscheibe ausgebildet, deren Durchtrittsöffnungen 1a derart bemessen sind, daß die Flüssigkeit 7 durchtreten kann und die in der Flüssigkeit enthaltenen Feststoffpartikel zurückgehalten werden. Das Filterelement 1 könnte beispielsweise auch als Metallsiebgewebe ausgebildet werden. Das Filterelement weist vorzugsweise eine offene Fläche von mehr als 45 % auf.

Wie insbesondere aus Fig.2 zu ersehen ist, taucht das Filterelement 1 lediglich mit einem Teilbereich in die Flüssigkeit ein. Die Flüssigkeit 7 fließt in Fig.1 von links nach rechts durch das Filterelement 1. Die Flüssigkeitsströmung wird dabei beispielsweise mittels einer Saugpumpe erzeugt. Das Filterelement 1 ist somit zweckmäßigerweise auf der linken Seite rauher ausgebildet, indem beispielsweise der durch die Herstellung des Filterelements bedingte Stempelaustritt der einzelnen Durchtrittsöffnungen 1a auf dieser linken Seite vorgesehen ist. An dieser vergleichsweise rauhen Oberfläche können die Feststoffpartikel, insbesondere Flusen, leichter festhaften.

Die Dreheinrichtung 2 wird durch eine Welle 2a gebildet, auf der das Filterelement 1 drehfest gehaltert ist. Die Welle 2a ist auf beiden Seiten des Filterelements in geeigneten Lagern 2b gehaltert. An ihrem einen Ende 2d ist die Welle in geeigneter Weise mit einem Motor 2c gekoppelt.

Während des Betriebes wird das Filterelement 1 kontinuierlich über den Motor 2c und die Welle 2a gedreht. Dabei werden die am Filterelement haftenden Feststoffpartikel mitgenommen und gelangen zur Düseneinrichtung 3.

Die Düseneinrichtung 3 besteht im wesentlichen aus einem Rohr 3a mit Öffnungen 3b sowie einem Ablenkelement 3c, das etwa horizontal in Höhe der Drehachse 2' angeordnet ist. Das Ablenkblech erstreckt sich dabei vom Rand des Filterelements 1 in Richtung der Drehachse 2' zumindest soweit, daß es den mit der Flüssigkeit 7 in Berührung kommenden Bereich des Filterelements 1 abdeckt. Das Ablenkelement 3c ist derart bezüglich des Rohres 3a angeordnet, daß die aus den Öffnungen 3b austretende Reinigungsflüssigkeit 7' derart auf das Ablenkelement 3c trifft, daß sich ein gleichmäßiger, über die gesamte Breite des Ablenkelementes 3c erstreckender Flüssigkeitsstrahl ausbildet, der auf das Filterelement 1 etwa in Höhe der Drehachse 2' trifft.

Wie insbesondere Fig.1 erkennen läßt, ist die Düseneinrichtung 3 hinter dem Filterelement 1, d.h. auf der rechten Seite angeordnet. Die Reinigungsflüssigkeit 7' tritt somit zunächst durch die Durchtrifftsöffnungen 1a des Filterelementes 1 und löst die auf der Vorderseite 1b anhaftenden Feststoffpartikel ab.

Die abgelösten Feststoffpartikel werden über ein sich unmittelbar anschließendes, schräg angeordnetes Leitelement 8 der Trenneinrichtung zugeführt. Diese Trenneinrichtung weist einen für die abgelösten Feststoffpartikel vorgesehenen Auffangbehälter 4 auf.

Der Auffangbehälter 4 sieht einen gelochten Boden 4a vor, durch den die Reinigungsflüssigkeit 7' austreten kann. Es bleibt somit ein Filtrat aus mit Reinigungsflüssigkeit 7' getränkten Feststoffpartikeln zurück. Hierdurch findet somit eine erste Trennung der abgelösten Feststoffpartikel von der Reinigungsflüssigkeit 7' statt. Die Trenneinrichtung weist ferner eine Auspreßvorrichtung auf, die das Filtrat zusammendrückt und dabei Reinigungsflüssigkeit 7' auspreßt. Diese Auspreßvorrichtung weist einen Stempel 5a sowie eine Auswurfklappe 5b auf. Der Stempel 5a wird beispielsweise durch eine geeignete pneumatische oder hydraulische Ansteuervorrichtung 9 betätigt. Der Stempel selbst wird beispielsweise durch einen Teflonschaber gebildet, der längs einer Stange 10 durch den Auffangbehälter 4 geführt wird.

Die Auswurfklappe 5b weist Mittel zum Aufbringen einer Vorspannung auf, die beispielsweise durch ein geeignetes Federelement gebildet werden.

Während des Betriebes wird der Stempel 5a über eine Steuerung in bestimmten Zeitabständen betätigt, wobei er das im Auffangbehälter 4 befindliche Filtrat zusammenschiebt und gegen die Auswurfklappe preßt. Je nach Einstellung der Vorspannung wird die Auswurfklappe 5b ab einem bestimmten Druck geöffnet, so daß das Filtrat, aus dem die Flüssigkeit weitgehend herausgedrückt worden ist, ausgestoßen werden kann. Es verbleibt somit ein relativ trockenes Filtrat.

Als Reinigungsflüssigkeit 7' wird erfindungsgemäß Flüssigkeit 7 aus dem Flüssigkeitssystem verwendet, die über einen Bypass zur Düseneinrichtung 3 geleitet wird. Dieser Bypass wird im dargestellten Ausführungsbeispiel durch das Rohr 3a gebildet. Ferner sind Mittel vorgesehen, um die von der Trenneinrichtung 5 abgetrennte Flüssigkeit 7' zum Flüssigkeitssystem zurückzuführen. Diese Mittel werden beim dargestellten Ausführungsbeispiel durch den gelochten Boden 4a des Auffangbehälters 4 gebildet, wobei die Flüssigkeit unmittelbar in die im Filter befindliche, zu reinigende Flüssigkeitsmenge tropft.

Im Betrieb wird das Filterelement 1 beispielsweise mit etwa zwei Umdrehungen pro Minute gedreht, so daß eine permanente Reinigung des Filterelementes 1 erfolgen kann. Je nach Anfall der Feststoffpartikel in dem Auffangbehälter 4 wird der Stempel 5a betätigt. Die Betätigung kann dabei in vorgegebenen Zeitabständen oder bei Überschreiten eines bestimmten Füllstandes im Auffangbehälter erfolgen. Im zweiteren Fall wären entsprechende Sensoren vorzusehen, die mit der Ansternervorrichtung 9 in Verbindung stehen.

Durch die erfindungsgemäße Ausgestaltung der Trennvorrichtung bleibt die Menge der Flüssigkeit im Flüssigkeitssystem im wesentlichen konstant und man erhält ein relativ trockenes Filtrat, das auf einfache Weise weiterverarbeitet bzw. entsorgt werden kann.

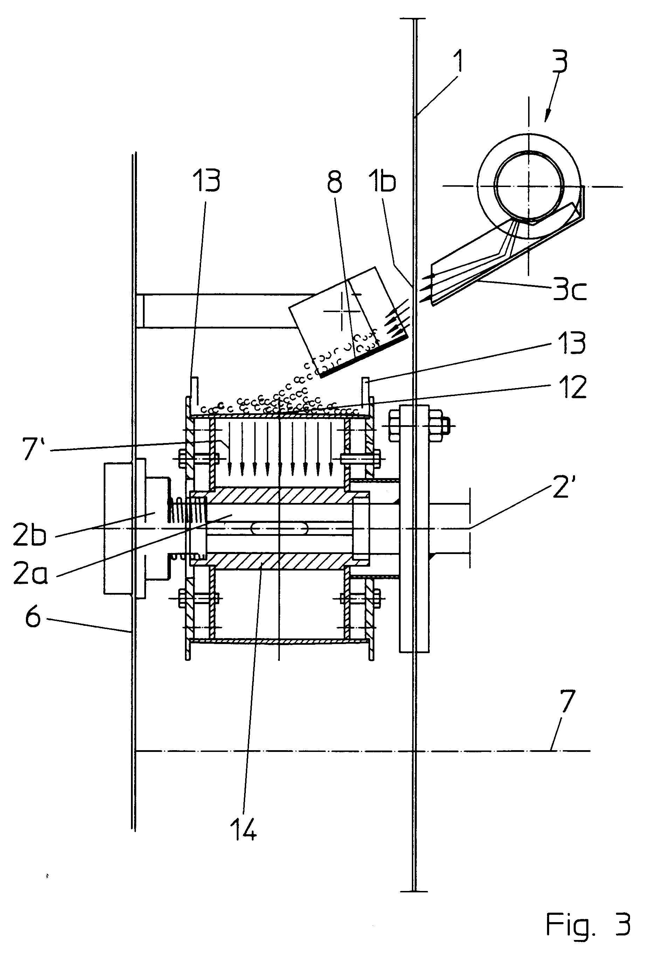

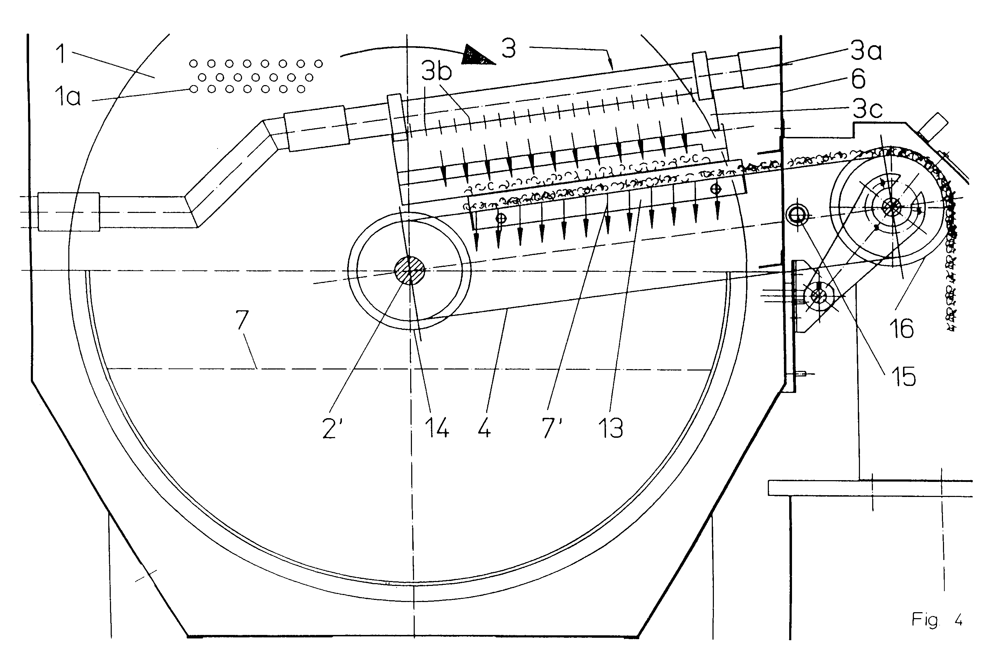

In den Fig.3 und 4 ist ein zweites Ausführungsbeispiel dargestellt, das sich im wesentlichen nur durch eine andere Trenneinrichtung vom ersten Ausführungsbeispiel unterscheidet. Für gleiche Elemente wurden daher auch dieselben Bezugszeichen verwendet.

Die Trenneinrichtung zum Trennen der abgelösten Feststoffpartikel von der Reinigungsflüssigkeit weist insbesondere ein Transportband auf, das als Siebtransportband 12 ausgebildet ist. Das Siebtransportband 12 wird über eine Antriebsrolle 14 und eine Spannrolle 16 geführt, wobei die Antriebsrolle 14 über die Welle 2a der Dreheinrichtung 2 angetrieben wird.

Damit die über das Leitelement 8 auf das Siebtransportband 12 fallenden Feststoffpartikel nicht seitlich vom Siebtransportband schwimmen, sind Seitenbegrenzungen 13 vorgesehen. Die mit den Feststoffpartikeln mitgeführte Reinigungsflüssigkeit 7' kann durch das Siebtransportband 12 durchtreten und tropft unmittelbar in die im Filter befindliche, zu reinigende Flüssigkeitsmenge.

Das Ablenkelement 3c der Düsenanordnung 3 ist im wesentlichen parallel zum Siebtransportband 12, oberhalb der Drehachse 2' des Filterelements 1 angeordnet. Das Siebband ist im dargestellten Ausführungsbeispiel derart angeordnet, daß die Feststoffpartikel schräg nach oben transportiert werden. Dadurch kann sichergestellt werden, daß die mit den Feststoffpartikeln auf das Siebtransportband 12 auftreffende Flüssigkeit durchtropft, bevor die Feststoffpartikel aus dem Filter herausgeführt werden. Die herausgeführten Feststoffpartikel gelangen dann beispielsweise in einen Auffangbehälter.

Es kann ferner eine Reinigungseinrichtung 15 vorgesehen werden, die im Bedarfsfall eine Reinigung des Siebtransportbandes 12 ermöglicht. Sie ist beispielsweise als Düse ausgebildet, wobei man als Reinigungsmittel beispielsweise Wasser oder Luft verwenden kann.

Die erfindungsgemäßen Filter zeichnen sich insbesondere dadurch aus, daß die Konzentration der Flüssigkeit im Flüssigkeitssystem nicht durch zusätzliches Frischwasser verdünnt wird. Dadurch bedingt ist zum einen kein zusätzlicher Wasserverbrauch sowie kein Chemikaliennachsatz erforderlich.

## Patentansprüche

1. Filter zur Reinigung einer Flüssigkeit (7) eines Flüssigkeitssystems, insbesondere zur Beseitigung von Feststoffpartikeln, wie Flusen, aus der Flüssigkeit, bestehend aus
- einem Filterelement (1), das Durchtrittsöffnungen (1a) aufweist, die die Flüssigkeit (7) durchtreten lassen und die Feststoffpartikel zurückhalten, wobei lediglich ein Teilbereich des Filterelements mit der Flüssigkeit in Kontakt steht,
- einer Dreheinrichtung (2) zum Drehen des Filterelements (1),
- einer Düseneinrichtung (3) zum Aufbringen von Reinigungsflüssigkeit (7') auf einen momentan nicht mit der Flüssigkeit (7) in Kontakt stehenden Bereich des Filterelements (1), um am Filterelement haftende Feststoffpartikel abzulösen,
- sowie einer Trenneinrichtung zum Trennen der abgelösten Feststoffpartikel von der Reinigungsflüssigkeit (7'),
dadurch gekennzeichnet, daß
als Reinigungsflüssigkeit (7') gefilterte Flüssigkeit (7) des Flüssigkeitssystems Verwendung findet, indem ein Bypass (Rohr 3a) gefilterte Flüssigkeit zur Düseneinrichtung leitet und ferner Mittel (gelochter Boden 4a; Siebtransportband 12) zur Rückführung der in der Trenneinrichtung abgetrennten Flüssigkeit (7') zum Flüssigkeitssystem vorgesehen ist.

2. Filter nach Anspruch 1, dadurch gekennzeichnet, daß das Filterelement (1) als Lochscheibe ausgebildet ist.

3. Filter nach Anspruch 1, dadurch gekennzeichnet, daß das Filterelement (1) als Metallsiebgewebe ausgebildet ist.

4. Filter nach Anspruch 1, dadurch gekennzeichnet, daß die Trenneinrichtung (5) eine Auspreßvorrichtung (5a, 5b) aufweist, um die mit Flüssigkeit getränkten Feststoffpartikel zusammenzudrücken und dabei die Flüssigkeit auszupressen.

5. Vorrichtung nach Anspruch 4, dadurch gekennzeichnet, daß die Auspreßvorrichtung einen Stempel (5a) sowie eine Auswurfklappe (5b) aufweist, wobei die mit Flüssigkeit getränkten Feststoffpartikel vom Stempel gegen die Auswurfklappe gedrückt werden.

6. Filter nach Anspruch 5, dadurch gekennzeichnet, daß die Auswurfklappe (5b) Mittel (11) zum Aufbringen einer Vorspannung aufweisen, so daß die Auswurfklappe erst bei Erreichen eines bestimmten Anpreßdrucks öffnet.

7. Filter nach Anspruch 1, dadurch gekennzeichnet, daß die Düseneinrichtung (3) ein im wesentlichen horizontales, etwa in Höhe der Drehachse (2') des Filterelements (1) angeordnetes Ablenkelement (3c) zur Erzeugung eines gleichmäßigen, auf das Filterelement gerichteten Strahls aufweist.

8. Filter nach Anspruch 1, dadurch gekennzeichnet, daß die Trenneinrichtung einen Auffangbehälter (4) für die abgelösten Feststoffpartikel aufweist.

9. Filter nach Anspruch 8, dadurch gekennzeichnet, daß ein Leitelement (8) vorgesehen ist, um die abgelösten Feststoffpartikel in den Auffangbehälter (4) zu leiten.

10. Filter nach Anspurch 9, dadurch gekennzeichnet, daß die Mittel zur Rückführung der in der Trenneinrichtung abgetrennten Flüssigkeit durch einen gelochten Boden (4a) des Auffangbehälters (4) gebildet werden.

11. Filter nach Anspruch 1, dadurch gekennzeichnet, daß die Trenneinrichtung ein Transportband für die abgelösten Feststoffpartikel aufweist.

12. Filter nach Anspruch 11, dadurch gekennzeichnet, daß die Mittel zur Rückführung der in der Trenneinrichtung abgetrennten Flüssigkeit durch eine Ausbildung des Transportbandes als Siebtransportband (12) gebildet werden.

13. Filter nach Anspruch 11, dadurch gekennzeichnet, daß die Düseneinrichtung (3) ein im wesentlichen parallel zum Transportband, oberhalb der Drehachse (2') des Filterelements (1) angeordnetes Ablenkelement (3c) zur Erzeugung eines gleichmäßigen, auf das Filterelement gerichteten Strahls aufweist.

14. Filter nach Anspruch 11, dadurch gekennzeichnet, daß eine Antriebsrolle (14) für das Transportband vorgesehen ist, die ebenfalls durch die Dreheinrichtung (2) angetrieben wird.
